# EUROPEAN PATENT APPLICATION

(11) **EP 1 592 006 A2**
(43) Date of publication of application: **02.11.2005**
(21) Application number: 05252571.4
(22) Date of filing: 25.04.2005
(51) Int. Cl.: G11B 19/12, G11B 19/04

(54) **Optical disc recording/reproducing apparatus**

(30) Priority: 28.04.2004 JP 2004134077
(71) Applicant: ORION ELECTRIC CO., Ltd., Takefu-City, Fukui 915-8555 (JP)
(72) Inventor: Umeda, Yuji, c/o Orion Electric Co., Ltd., Takefu-city Fukui 915-8555 (JP)
(74) Representative: Paget, Hugh Charles Edward

(57) **Abstract**

The objective is to provide a recording/reproducing apparatus where when a disc is inserted into the recording/reproducing apparatus, when administrative information pre-recorded on the optical disc does not coincided with another administrative information retained in the recording/reproducing apparatus, notification of the discordance of the administrative information is made, and it is possible to pre-notify a user that recording/editing into/of the optical disc cannot be performed due to this discordance of the administrative information.

When inserting an optical disc into a recording/reproducing apparatus for an optical disc where primary data, such as characters, and administrative information as sub-data, such as manufacturer information, are recordable, the administrative information recorded on the optical disc and the administrative information pre-recorded retained in the recording/reproducing apparatus are compared by a microcomputer, and when the compared administrative information does not coincide, a warning means, such as a display established in an instrument connected to the recording/reproducing apparatus, notification is made of the discordance as a warning.

## Description

### BACKGROUND OF THE INVENTION

### Field of the Invention

The present invention relates to an optical disc recording/reproducing apparatus where an optional manufacturer ID (Company ID) is recorded on the region of LAST_MNF_ID of MNF IT as the administrative information of an optical disc after recording or editing the optical disc, and where a record recorded by the optical disc recording/reproducing apparatus is recorded onto the optical disc used for recording/editing.

Information recorded on an optical disc includes primary data, such as images, sounds, characters or symbols, and administrative information as sub-data, and diverse administrative information, such as manufacturer information, included in the administrative information recorded on the optical disc. In other words, administrative information referred to as MNF_ID (Manufacturer Information Table), which indicates the device that recorded the information, is recorded on the recorded optical disc. The administrative information is technology that has been standardized and is generally used.

### Description of the Related Art

Recently, end users who use a recording/reproducing apparatus, such as a personal computer, have been able to easily record/edit data on an optical disc using a personal computer or a recording/reproducing apparatus that can record/play on recording media, such as a DVD (digital versatile disk). However, it is rare but possible that the end user may encounter a problem where an image or a sound may jump due to corrupted content data existing as primary data, or another problem where, since writing to the contents recorded on an optical disc is protected so as not to record or edit [data onto the optical disc] by writing, the optical disc cannot be freely used for recording or editing. Further, for example, the Patent Reference discloses that if a disc ID (MNF_ID) as the administrative information recorded on the disc is not a disc ID that corresponds to a device on which is recorded administrative information, because the device that performed the recording is another device manufactured by a different manufacturer, there is no compatibility, and data recording or editing the optical disc cannot be performed at all.

Further, even if the MNF_ID pre-recorded on the optical disc and the MNF_ID retained in a DVD recorder as the recording/reproducing apparatus are different, there are some DVD recorders that can perform recording/editing. However, there is no recording/reproducing apparatus that can display a warning about the discordance of the MNF_ID, so even if the MNF_ID in the optical disc does not coincide with the MNF_ID in the recording/reproducing apparatus where the optical disc is inserted, if recording or editing is performed by the recording/reproducing apparatus, data recorded on the optical disc may be corrupted, depending upon the circumstances.

### [Patent Reference 1]

### Publication of Japanese Laid-Open Patent Application H 6-259939

### SUMMARY OF THE INVENTION

In Patent Reference 1 above, since an optical disc may not be able to be recorded or edited depending upon the device to be used, due to the discordance of the administrative information recorded on the optical disc, for example, when asking an acquaintance to edit an optical disc, because of the administrative information, recording/editing may not be possible by a device other than the device that performed the initial recording, so there is no versatility, and it cannot adopted for practical use. Further, among conventional recording/reproducing apparatuses, there is no recording/reproducing apparatus that pre-notifies a user about discordance between the MNF_ID as the administrative information recorded on the optical disc and the MNF_ID of a recording/reproducing apparatus where an optical disc is inserted before recording or editing the optical disc.

The present invention has been achieved by taking the above-mentioned problems into consideration, and its objective is to provide an optical disc recording/reproducing apparatus where, when a disc is inserted into the optical disc recording/reproducing apparatus, if administrative information, such as the disc ID (MNF_ID), recorded on the optical disc does not coincide with other administrative information pre-recorded in the recording/reproducing apparatus, and a user who uses the recording/reproducing apparatus can be notified of the discordance, it is possible to notify the user that there is concern that the data in the optical disc may be corrupted if recording or editing of the optical disc is performed, due to the discordance of the administrative information.

An optical disc recording/reproducing apparatus in Claim 1 of the present invention is characterized by the fact that it is a recording/reproducing apparatus for an optical disc where primary data, such as characters, images or symbols, and administrative information as sub-data, such as information about the manufacturer of the device that last recorded onto the optical disc, are recordable; and is constructed such that when inserting the optical disc into the above-mentioned recording/reproducing apparatus, administrative information pre-recorded on the optical disc and other administrative information retained in the recording/reproducing apparatus are compared by a microcomputer incorporated in the above-mentioned recording/reproducing apparatus, and when the compared administrative information does not coincide, a warning means established in an instrument connected to the above-mentioned recording/reproducing apparatus provides a warning about the discordance.

With the construction in Claim 1, when inserting an optical disc into a recording/reproducing apparatus, a microcomputer in the recording/reproducing apparatus compares whether or not the administrative information in the optical disc of the device that last recorded onto the optical disc coincides with the administrative information pre-recorded in the recording/reproducing apparatus, and if the compared administrative information does not coincide, a warning means of an instrument connecting the above-mentioned recording/reproducing apparatus where the optical disc is inserted can notify a user of the discordance.

The optical disc recording/reproducing apparatus in Claim 2 of the present invention is characterized by the fact that it is a recording/reproducing apparatus for an optical disc where primary data, such as characters, images or symbols, and administrative information as sub-data, such as information about the manufacturer of the device that last recorded onto the optical disc, are recordable; and is constructed such that when inserting the above-mentioned optical disc into the above-mentioned recording/reproducing apparatus, administrative information recorded on the optical disc and other administrative information pre-recorded in the recording/reproducing apparatus are compared by a microcomputer incorporated in the above-mentioned recording/reproducing apparatus, and when the compared administrative information does not coincide, a warning means established in the above-mentioned recording/reproducing apparatus provides a warning about the discordance.

With the construction in Claim 2, when inserting an optical disc into a recording/reproducing apparatus, a microcomputer in the recording/reproducing apparatus compares whether or not the administrative information recorded in the optical disc of the device that last recorded onto the optical disc coincides with the administrative information pre-recorded in the recording/reproducing apparatus, and when the compared administrative information does not coincide, the warning means of the above-mentioned recording/reproducing apparatus where the optical disc is inserted can notify a user about the discordance.

In the optical disc recording/reproducing apparatus according to Claim 1 or Claim 2, the optical disc recording/reproducing apparatus in Claim 3 of the present invention is characterized by the fact that the above-mentioned warning means is a display to display an image.

With the construction in Claim 3, a warning can be displayed on a display as an image, so the user of the recording/reproducing apparatus can confirm the warning with an initial glance.

In the optical disc recording/reproducing apparatus of Claim 3, the optical disc recording/reproducing apparatus in Claim 4 of the present invention is characterized by the fact that the above-mentioned display is the monitor of a television receiver.

With the construction in Claim 4, attention can be displayed on the monitor of a television receiver, which is widely diffused, so that it excels in versatility.

In the optical disc recording/reproducing apparatus according to any of Claim 1 through Claim 4, the optical disc recording/reproducing apparatus in Claim 5 of the present invention is characterized by the fact that the administrative information pre-recorded retained in the above-mentioned recording/reproducing apparatus is an MNF_ID retained in the data retention region of the microcomputer.

In the construction in Claim 5, a microcomputer can determine whether or not the optical disc has been recorded by a device that complies with the standard of the MNF_ID, comprising one of the DVD standards.

The optical disc recording/reproducing apparatus in Claim 1 of the present invention comprises a recording/reproducing apparatus for an optical disc where primary data, such as characters, images or symbols, and administrative information as sub-data, such as the manufacturer information of the device that last recorded onto the optical disc, are recordable; and is constructed such that when inserting the above-mentioned optical disc into the above-mentioned recording/reproducing apparatus, the administrative information recorded on this optical disc and the administrative information pre-recorded in the above-mentioned recording/reproducing apparatus are compared by a microcomputer incorporated in the above-mentioned recording/reproducing apparatus, and when the compared administrative information does not coincide, notification of the discordance is made by a warning means established in an instrument connected to the above-mentioned recording/reproducing apparatus, so each administrative information is compared by the microcomputer, and the warning means can notify a user that it is rare but possible that an image or a sound may jump due to the corruption of the primary data in the optical disc inserted into the recording/reproducing apparatus because of the discordance of the administrative information, and the notification that the user needs to pay attention results in the realization of specifications where the misuse of an optical disc recorded by another manufacturer can be prevented; and concurrently, where [users] can use a safer disc.

The optical disc recording/reproducing apparatus in Claim 2 of the present invention is a recording/reproducing apparatus for an optical disc where primary data, such as characters, images or symbols, and administrative information as sub-data, such as the manufacturer information of the device that last recorded onto the optical disc, are recordable; and is constructed such that when inserting the above-mentioned optical disc into the above-mentioned recording/reproducing apparatus, the administrative information recorded on the optical disc and the administrative information pre-recorded in the above-mentioned recording/reproducing apparatus are compared by a microcomputer incorporated in the above-mentioned recording/reproducing apparatus, and when the compared administrative information does not coincide, notification of the discordance is made by a warning means established in the above-mentioned recording/reproducing apparatus, so each administrative information is compared by the microcomputer, and the warning means can notify the user that it is rare but possible that an image or a sound may jump due to the corruption of the primary data in the optical disc inserted into the recording/reproducing apparatus because of the discordance of the administrative information, and the notification to which the user needs to pay attention results in the realization of specifications where the misuse of an optical disc recorded by another manufacturer can be prevented; concurrently, where [users] can use a safer disc.

According to the optical disc recording/reproducing apparatus in Claim 3 of the present invention, in the optical disc recording/reproducing apparatus in Claim 1 or Claim 2, the above-mentioned warning means is a display to display an image, and the warning means can provide a warning by displaying attention on the display as an image, so the user of the recording/reproducing apparatus can confirm the warning with an initial glance.

According to the optical disc recording/reproducing apparatus in Claim 4 of the present invention, in the optical disc recording/reproducing apparatus in Claim 3, the above-mentioned display is the monitor of a television receiver, and since attention can be displayed on the monitor of the television receiver, which is widely diffused, it excels in versatility.

According to the optical disc recording/reproducing apparatus in Claim 5 of the present invention, in the optical disc recording/reproducing apparatus in any of Claim 1 through Claim 4, the administrative information pre-recorded in the above-mentioned recording/reproducing apparatus is the MNF_ID retained in the data retention region of the above-mentioned microcomputer, so it can be determined whether or not the optical disc has been recorded by an instrument, which complies with the standard of the MNF_ID.

### BRIEF DESCRIPTION OF THE DRAWINGS

Fig. 1 is a perspective view that shows a recording/reproducing apparatus of the present invention.
Fig. 2 is a block diagram relating to the recording/reproducing apparatus of the present invention.
Fig. 3 is a perspective view that shows a remote control of the present invention.
Fig. 4 is a flowchart that shows the operational procedure for the recording/reproducing apparatus of the present invention.
Fig. 5 is a flowchart that shows the operational procedure of the recording/reproducing apparatus of the present invention.
Fig. 6 is a front view of an image displayed on a monitor, generally, of the present invention.

### DETAILED DESCRIPTION OF THE PREFERRED EMBODIMENTS

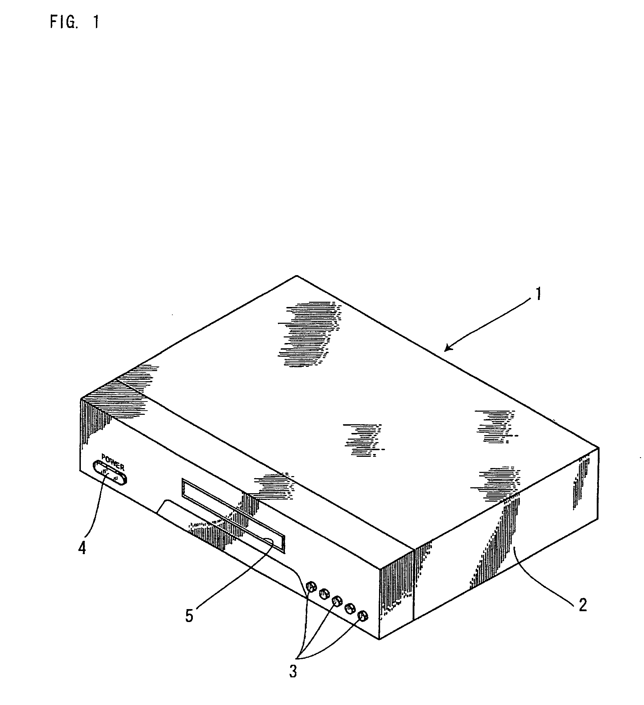

An embodiment as a preferred embodiment of the invention is described hereafter, with reference to Figs. 1 through 6.

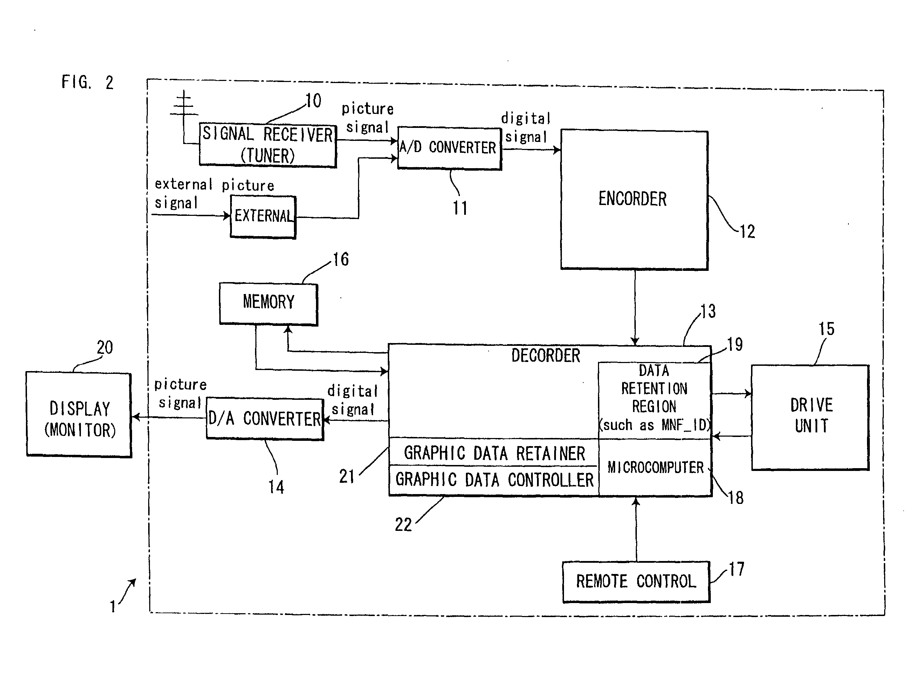

Fig. 1 is a perspective view that shows an example of the present invention, and that shows a recorder as an optical disc recording/reproducing apparatus where an optical disc is recordable/editable. Fig. 2 is a block diagram that shows the entire general construction of the recorder. As shown in Fig. 1, the body of the recorder 1 is formed from a box-state cabinet 2, and manual operation buttons 3, a POWER button 4 and an optical disc insertion slot 5 generally are established. Furthermore, the above-mentioned recording/editing into/of the optical disc can be both recording and editing, or either recording or editing.

Further, the inside of the cabinet 2, as shown in Fig. 2, is provided with a tuner 10 that receives a radio signal and demodulates the signal into an analog signal; an A/D converter 11 that converts a picture signal, which is the analog signal transmitted from the tuner 10, into a digital signal; an encoder 12 comprising an LSI that encodes the digital signal converted by the A/D converter 11; a decoder 13 that decodes the digital signal encoded by the encoder 12 or a digital signal of the optical disc read by a drive unit 15; a D/A converter 14 that converts the digital signal decoded by the decoder 13 into an analog signal; a drive unit 15 that can read or/and rewrite from/into a recording medium, such as an optical disc; a memory 16 where manufacturer information as sub-data, entered/transmitted into/from the above-mentioned decoder 13, and which is referred to as the MNF_ID (Manufacturer Information Table) is recorded on the optical disc, and the operational status of the device are temporarily stored; and a remote control 17 that can remotely control the body of the recorder 1. Furthermore, the above-mentioned decoder 13 is equipped with a microcomputer 18, comprising a control means that controls the entire recorder 1; a data retention region 19 where administration information, such as a manufacturer of the recording/reproducing apparatus, has been pre-recorded and is retained; a graphic data retainer 21 for displaying a warning, the indication of the operational status of the device or a function selection screen on the screen; and a graphic data controller 22 where the output of the graphic data is controlled. Further, the symbol 20 shown in Fig. 2 is a display to display an image, comprising a warning means connected to the above-mentioned recorder 1, designed such that an analog signal, such as a picture signal that has been converted by the D/A converted 14, is transmitted to the display 20, and is displayed as an image. Furthermore, in the present embodiment, the display 20 is connected to the recorder 1, and is constructed such that a signal, such as an image or a sound, is entered/transmitted. However, construction is not particularly limited to this construction, and the display 20 can be integrally equipped with a recorder 1, but a monitor of a television receiver (un-shown) can be used by connecting the recorder 1 to the television receiver.

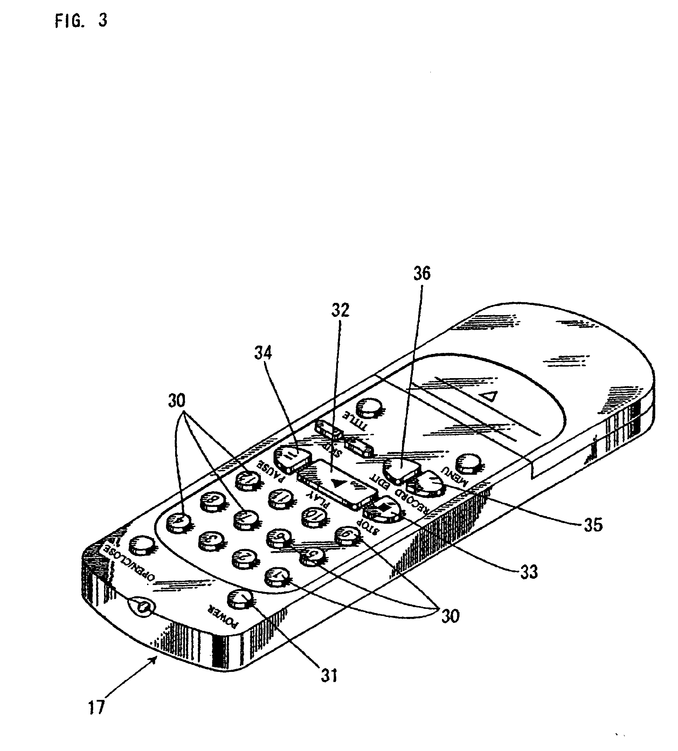

Fig. 3 is a perspective view that shows the remote control. The remote control 17 is equipped with various operation keys, which can remotely control the recorder 1, and other than a channel key 30 for the purpose of switching the frequency of the tuner 10 and a POWER key 31, a PLAY key 32 for the purpose of the operation of the optical disc inserted into the drive unit 15 of the recorder 1, a STOP key 33, a PAUSE key 34, a RECORD key 35 and an EDIT key 36 are established. Furthermore, when the operation of the RECORD key 35 or the EDIT key 36, the microcomputer 18 compares the MNF_ID recorded on the optical disc and the administrative information of the manufacturer information pre-recorded on the microcomputer [18] of the recorder 1 in the present embodiment.

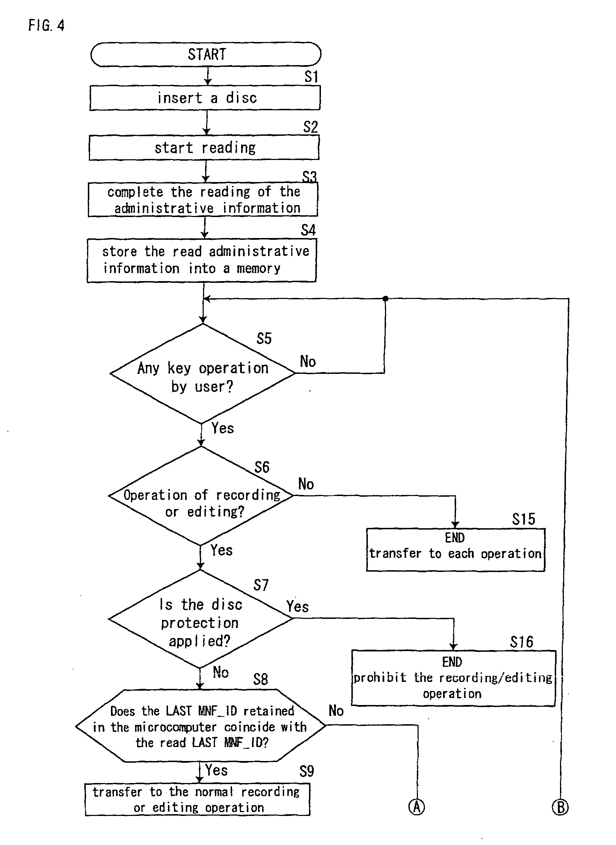

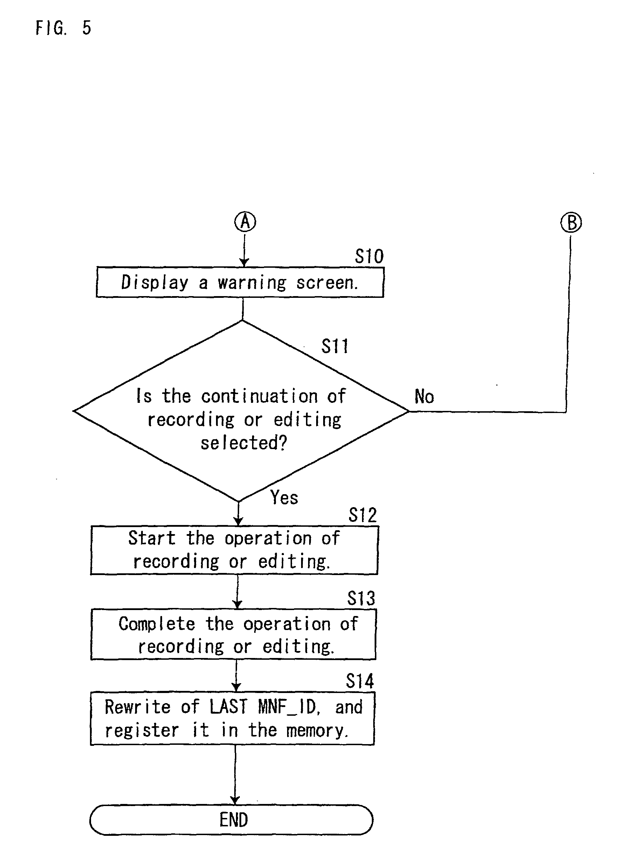

The operational procedure relating to the above-mentioned recorder [1] is described next. An optical disc, where data has been recorded or edited by any instrument, is inserted into the drive unit 15 of the recorder 1 by a user via the optical disc insertion slot 5. Furthermore, in this case, the administrative information of the MNF_ID as sub-data has been recorded on the optical disc as other than the primary data. Then, the administrative information, such as a manufacturer's name and a product type used for recording the data in the optical disc, is recorded on the optical disc where the data was recorded or edited by the recorder 1 of the present embodiment or an instrument, which can record or edit into/of the optical disc manufactured by a manufacturer different from the one for the recorder 1. The operation when inserting this optical disc into the drive unit [15] of the recorder 1 in the present embodiment is described hereafter, with reference to Fig. 4 and Fig. 5.

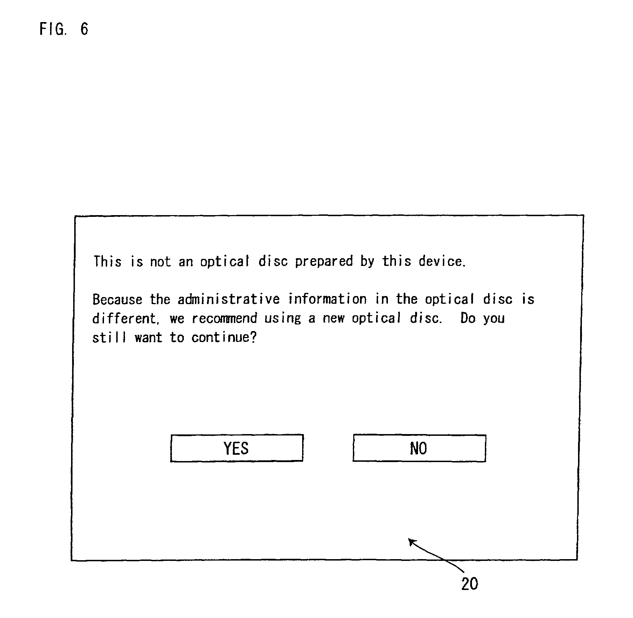

When an optical disc is inserted into the drive unit 15 of the recorder 1 via the optical disc insertion slot 5 of the recorder 1 in STEP 1, the drive unit 15 starts reading the administrative information generally from the optical disc in STEP 2. Then, as in STEP 3, when the reading of the administrative information by the drive unit 15 is completed, the read information is retained in the data retention region 19 of the decoder 13, and is stored in memory 16 in next STEP 4. Next, in STEP 5, the drive unit 15 of the recorder 1 where the optical disc has been inserted by a user is operated by various operation keys in the remote control 17. In STEP 6, among the various operation keys, when operating the drive unit 15 by the RECORD key 35 or the EDIT key 36 for the purpose of recording or editing of the optical disc, respectively, the microcomputer 18 determines whether or not the writing protection for the purpose of the prevention of writing into the optical disc is applied in STEP 7. In the case that there is no writing protection applied, whether or not the administrative information retained in the data retention region 19 of the microcomputer 18 coincides with the administrative information recorded on the optical disc inserted into the drive unit 15 is compared by the microcomputer 18 as shown in STEP 8. If the administrative information coincides, recording of images as primary data or editing of these images in the optical disc inserted into the drive unit 15 becomes operable by the operation keys in the remote control [17]. On the other hand, in STEP 8, when the administrative information does not coincide, in STEP 10 shown in Fig. 5, a warning screen is shown for confirmation, stating "This is not an optical disc prepared by this device. Because the administrative information in the optical disc is different, the use of a new optical disc is recommended. Do you still want to continue?" shown in Fig. 6 is displayed on the display 20.

Then, in the situation where a user selects "YES" between "YES" or "NO" on the image displayed on the monitor 20 [sic] as shown in Fig. 6; [in other words,] in a situation whether or not the continuation of recording or editing is selected in STEP 11 is shown in Fig. 5, when the remote control 17 is operated to select "YES" by the operation key, recording or editing of the optical disc become operable by the RECORD key 35 or the EDIT key 36, respectively, in STEP 12. In STEP 13, when the user completes the operation of recording or editing into/of the optical disc, as shown in STEP 14, rewriting of the MNF_ID, which is the administrative information recorded on the optical disc, is registered in the memory [16] of the optical disc by transmitting a signal to the drive unit [15] by the microcomputer 18 in the decoder 13, based upon the administrative information retained in the data retention region 19. Furthermore, in STEP 5, when the drive unit 15 of the recorder 1, where the optical disc has been inserted by the user generally, is not operated by the various operation keys in the remote control 17, the process returns to STEP 5. Further, in STEP 6, if the drive unit 15 is not operated by the RECORD key 35 or the EDIT key 36 for the purpose of recording or editing of the optical disc, respectively, this operation is terminated. Further, even in STEP 7, when write protection is applied to the optical disc, since recording and editing into/of the optical disc are prohibited, the operation is terminated. Further, in STEP 11, in the situation to select whether or not the continuation of recording or editing is selected, when "NO" shown in Fig. 6 is selected by operating the operation key in the remote control 17, the process goes back to STEP 5.

As described above, according to the present embodiment, the recording/reproducing apparatus is a recorder as a recording/reproducing apparatus for an optical disc where there is primary data, such as characters, images or symbols, and administrative information as sub-data, such as information about the manufacturer of the device that last recorded onto the optical disc, and it is constructed such that when inserting the optical disc into the drive unit 15 of the recorder 1, the administrative information pre-recorded in the optical disc and the administrative information retained in the recorder 1 as a recording/reproducing apparatus are compared by the microcomputer [18] incorporated in the recorder [1], and when the compared administrative information does not coincide, a discordance warning is provided by a warning means, such as the display 20 established in an instrument connected to the recorder, or by another warning means, such as the display 20 established in the recorder [1]. Because of this construction, when inserting the optical disc into the recorder 1 as a recording/reproducing apparatus, whether or not the administrative information in the optical disc, where the device that last recorded onto the optical disc has been recorded, coincides with the administrative information pre-recorded in the recorder 1 is compared by the microcomputer [18] of the recorder 1, and when the administrative information does not coincide, notification of the discordance of the administrative information can be made by the warning means to call it to the attention of the user, such as the display 20 established in an instrument connected to the recorder 1 or established in the recorder 1. This enables notification to the user that it is rare but possible that an image or a sound may jump due to the corruption of the primary data in the optical disc inserted into the recorder [1], and the notification to the user to pay attention results in the realization of the specifications where the misuse of the optical disc recorded by other manufacturer can be prevented, and concurrently, where [users] can use a safer optical disc. In addition, the warning means of the recorder 1, as described above, is the display 20 to display an image, and since a warning can be displayed on the display 20 as an image, the user of the recorder 1 can confirm the warning with an initial glance. Further, as the display 20, when using the monitor of a television receiver, since a warning can be displayed on the monitor of the television receiver, which is widely diffused, it excels in versatility. In addition, since the administrative information pre-recorded in the recorder [1] is the MNF_ID retained in the data retention region 19 of the microcomputer [18], whether or not the optical disc has been recorded by a device, which complies with the standard of the MNF_ID that is one of the DVD standards (Digital Versatile Disk), can be easily determined by the microcomputer [18]. Concurrently, if data in this optical disc has been recorded or edited by a device or an instrument that has this standard, [information about] the manufacturer of the device, which performed recording or editing into/of this optical disc, can be displayed on the warning means, such as the display 20, so it becomes possible that the user confirms the warning.

As described above, the embodiment of the present invention has been described in detail. However, the present invention is not limited to the above-mentioned embodiment, and various modified implementations are possible within the scope of the outline of the present invention. For example, the warning means indicates a display or a monitor of a television receiver. However, it is not be limited to these, and it can be a monitor used for a personal computer, and these can be appropriately selected.

## Claims

1. An optical disc recording/reproducing apparatus, wherein, the optical disc recording/reproducing apparatus is a recording/reproducing apparatus for an optical disc where primary data, such as characters, images or symbols, and administrative information as sub-data, such as information about the manufacturer of the device that last recorded onto the optical disc, are recordable; construction being such that when inserting the optical disc into the recording/reproducing apparatus, administrative information recorded on the optical disc, and other administrative information pre-entered in the recording/reproducing apparatus are compared by a microcomputer incorporated in the recording/reproducing apparatus, and when the compared administrative information does not coincide, a warning means established in an instrument connected to the recording/reproducing apparatus warns of the discordance.

2. An optical disc recording/reproducing apparatus, wherein, the optical disc recording/reproducing apparatus is a recording/reproducing apparatus for an optical disc where primary data, such as characters, images or symbols, and administrative information as sub-data, such as information about the manufacturer of the device that last recorded onto the optical disc, are recordable; construction being such that when inserting the optical disc into the recording/reproducing apparatus, administrative information recorded on the optical disc and another administrative information pre-recorded on the recording/reproducing apparatus are compared by a microcomputer incorporated in the recording/reproducing apparatus, and when the compared administrative information does not coincide, a warning means established in the recording/reproducing apparatus warns of discordance.

3. The optical disc recording/reproducing apparatus according to Claim 1 or Claim 2, wherein the warning means is a display for displaying an image.

4. The optical disc recording/reproducing apparatus according to Claim 3, wherein, the display is a monitor of a television receiver.

5. An optical disc recording/reproducing apparatus according to any of Claim 1 through Claim 4, wherein, the administrative information pre-recorded on the recording/reproducing apparatus is an MNF_ID retained in a data retention region of the microcomputer.
